(19) Europäisches Patentamt
European Patent Office
Office européen des brevets

(11) EP 1 913 089 B1

(12) EUROPÄISCHE PATENTSCHRIFT

(45) Veröffentlichungstag und Bekanntmachung des Hinweises auf die Patenterteilung:
**10.03.2010 Patentblatt 2010/10**

(21) Anmeldenummer: **06792619.6**

(22) Anmeldetag: **31.07.2006**

(51) Int Cl.:
***C08L 67/02*** (2006.01) ***C08L 25/12*** (2006.01)
***C08L 51/04*** (2006.01) ***C08L 87/00*** (2006.01)

(86) Internationale Anmeldenummer:
**PCT/EP2006/064853**

(87) Internationale Veröffentlichungsnummer:
**WO 2007/014938 (08.02.2007 Gazette 2007/06)**

(54) **THERMOPLASTISCHE FORMMASSEN AUF BASIS VON POLYESTERN UND STYROLCOPOLYMEREN**

THERMOPLASTIC MOLDING MATERIALS BASED ON POLYESTERS AND STYRENE COPOLYMERS

MATIERES MOULABLES THERMOPLASTIQUES A BASE DE POLYESTERS ET DE COPOLYMERES DE STYRENE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2005 DE 102005037329**

(43) Veröffentlichungstag der Anmeldung:
**23.04.2008 Patentblatt 2008/17**

(73) Patentinhaber: **BASF SE**
**67056 Ludwigshafen (DE)**

(72) Erfinder:
- **WEBER, Martin**
**67487 Maikammer (DE)**
- **HOPFENSPIRGER, Xaver**
**67454 Hassloch (DE)**

(56) Entgegenhaltungen:
**WO-A-01/38436 WO-A-03/085047**

EP 1 913 089 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft thermoplastische Formmassen, enthaltend

A) 10 bis 97,5 Gew.-% mindestens eines thermoplastischen Polyesters A,

B) 1 bis 97,5 Gew.-% mindestens eines Pfropfpolymerisats B aus

b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,

b2) 20 bis 60 Gew.-% einer Pfropfauflage B2 aus

b21) 60 bis 95 Gew.-% Styrol oder substituierten Styrolen B21 der allgemeinen Formel I

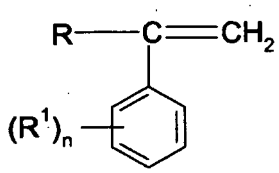

(I)

worin R einen $C_{1-8}$-Alkylrest oder Wasserstoff und $R^1$ einen $C_{1-8}$-Alkylrest bedeutet und n den Wert 1, 2 oder 3 hat, oder deren Mischungen und

b22) 5 bis 40 Gew.-% mindestens eines ungesättigten Nitrils B22,

C) 1 bis 97,5 Gew.-% mindestens eines thermoplastischen Copolymerisats C aus,

c1) 60 bis 85 Gew.-% Styrol oder substituierten Styrolen C1 der allgemeinen Formel I oder deren Mischungen und

c2) 15 bis 40 Gew.-% mindestens eines ungesättigten Nitrils C2,

D) 0,5 bis 50 Gew.-% mindestens eines Copolymerisats D, erhältlich durch Umsetzung von

d1) 5 bis 95 Gew.-% mindestens eines thermoplastischen Methacrylat-Polymeren D1 enthaltend mindestens eine Art funktioneller Gruppen, ausgewählt aus Epoxy, Carboxyl, Hydroxyl, Anhydrid und Oxazolin, mit
d2) 5 bis 95 Gew.-% mindestens eines thermoplastischen Polyesters D2,

E) 0 bis 40 Gew.-% mindestens eines Füllstoffs E,

F) 0 bis 2 Gew.-% mindestens einer organischen Säure F,

G) 0 bis 25 Gew.-% mindestens einer halogenfreien Phosphorverbindung G,

H) 0 bis 45 Gew.-% weiterer Zusatzstoffe H,

wobei die Summe der Komponenten A bis H stets 100 % ergibt..

Außerdem betrifft die Erfindung die Verwendung der erfindungsgemäßen thermoplastischen Formmassen zur Herstellung von Fasern, Folien und Formkörpern, sowie die hierbei erhältlichen Formkörper jeglicher Art.

Polymerblends aus Polyestern und Styrolcopolymeren, wie beispielsweise ABS (Acrylnitril-Butadien-Styrol-Polymerisate) oder ASA (Acrylnitril-Styrol-Acrylat-Polymerisate), sind seit langem bekannt (DE-A 27 58 497, DE-A 19 845 317). Diese Produkte weisen im Vergleich zu Polyestern gute Dimensionsbeständigkeit auf, weshalb diese Formmassen vor allem im Automobilbereich Verwendung finden.

Aufgrund der Unverträglichkeit zwischen den Komponenten ist die Zähigkeit solcher Produkte verbesserungswürdig.

Aus der Literatur sind daher verschiedene Ansätze bekannt, die Verträglichkeit der Phasen zu verbessern, wobei vor allem funktionalisierte Styrolcopolymere (EP-A 284 086, US 4,902,749, US 5,310,793, Lee P.-C., Kuo W.-F., Chang F.-C., Polymer 1994, 35, 5641) und reaktive Acrylatcopolymere (EP-A 573 680, US 4,352,904, Hage E., Hale W., Keskkula, Paul D.R. Polymer, 1997, 38, 3237) verwendet werden.

So beschreibt z.B. F.-C. Chang et. al (Polymer 35, 5641, 1994) eine Methode, PBT und ABS zu kompatibilisieren. Dabei werden SAN-GMA-Terpolymere als reaktive Modifier eingesetzt. Der Zähigkeitssteigerung steht jedoch eine signifikante Reduktion der Fließfähigkeit gegenüber.

Aus der WO 04/55107 sind Formmassen auf Basis von Polykondensaten und Styrolcopolymeren bekannt, welche neben SAN-MA-Terpolymeren ein Polyioscyanat enthalten. Diese Formmassen zeigen verbesserte Zähigkeit, haben jedoch Nachteile bei der Schmelzestabilität.

Aufgabe der vorliegenden Erfindung war daher, Formmassen auf Basis von Polyestern und Styrolcopolymeren zur Verfügung zu stellen, die neben guter Zähigkeit auch gute Fließfähigkeit und Verarbeitbarkeit aufweisen.

Demgemäß wurden die eingangs definierten Formmassen gefunden. Bevorzugte Ausführungsformen sind den Unteransprüchen zu entnehmen.

Überraschenderweise wurde gefunden, dass Umsetzungsprodukte aus reaktivem PMMA und Polyestern, in Polyester/Styrolcopolymer-Blends neben einer Verbesserung der Zähigkeit auch gute Verarbeitbarkeit (Fließfähigkeit, Schmelzestabilität) ergeben.

Als Komponente (A) enthalten die erfindungsgemäßen Formmassen 10 bis 97,5, bevorzugt 10 bis 93 und insbesondere 20 bis 89,5 Gew.-% mindestens eines thermoplastischen Polyesters.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:

1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder

Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

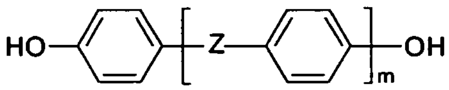 ,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_6$-Alkyl- oder Alkoxygruppen und Fluor, Chlor oder Brom als Substituenten tragen.

Als Stammkörper dieser Verbindungen seien beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)suffoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,

sowie insbesondere

2,2-Di-(4'-hydroxyphenyl)propan
2,2-Di-(3',5-dichlordihydroxyphenyl)propan,

1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan

oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US A 3 651 014, beschrieben. Auch im Handel sind entsprechende Produkte erhältlich, z.B. Hytrel® (DuPont).

Ein oder eine Mischung unterschiedlicher Pfropfcopolymerisate werden als Komponente B) in den erfindungsgemäßen Formmassen in Mengen von 1 bis 97,5 Gew.-%, bezogen auf die Summe der Komponenten A) bis H), eingesetzt. Bevorzugte erfindungsgemäße Formmassen enthalten von 3 bis 50, besonders bevorzugt von 2 bis 25 Gew.-%, bezogen auf die Summe der Komponenten A) bis H), mindestens eines Pfropfcopolymerisates B.

Die Pfropfpolymerisate B sind aufgebaut aus

$b_1$) 40 bis 80 Gew.-%, vorzugsweise 50 bis 70 Gew.-% einer Pfropfgrundlage aus einem kautschukelastischen Polymeren auf der Basis von Alkylacrylaten mit 1 bis 8 C-Atomen im Alkylrest und mit einer Glasübergangstemperatur von unter 0°C

$b_2$) 20 bis 60 Gew.-%, vorzugsweise 30 bis 50 Gew.-% einer Pfropfauflage aus

$b_{21}$) 60 bis 95 Gew.-%, bevorzugt 70 bis 85 Gew.-% Styrol oder substituierten Styrolen der allgemeinen Formel I

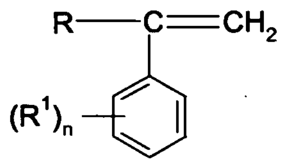

(I)

worin R einen $C_1$- bis $C_8$-Alkylrest, bevorzugt Methyl oder Ethyl, oder Wasserstoff bedeutet und $R^1$ einen $C_1$- bis $C_8$-Alkylrest, bevorzugt Methyl oder Ethyl, darstellt und n den Wert 1, 2 oder 3 hat oder deren Mischungen und

$b_{22}$) 5 bis 40 Gew.-%, vorzugsweise 15 bis 30 Gew.-% mindestens eines ungesättigten Nitrils, bevorzugt Acrylnitril oder Methacrylnitril oder deren Mischungen.

Für die Pfropfgrundlage $b_1$ kommen Polymerisate in Betracht, deren Glasübergangstemperatur unterhalb von 10°C, vorzugsweise unterhalb von 0°C, besonders bevorzugt unterhalb von -20°C liegt. Dies sind z.B. Elastomere auf der Basis von $C_1$- bis $C_8$-Alkylestern der Acrylsäure, die gegebenenfalls weitere Comonomere enthalten können.

Bevorzugt sind Pfropfgrundlagen $b_1$, die aufgebaut sind aus

$b_{11}$) 70 bis 99,9 Gew.-%, vorzugsweise 99 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat

$b_{12}$) 0 bis 30 Gew.-%, insbesondere 20 bis 30 Gew.-% eines weiteren copolymerisierbaren monoethylenisch ungesättigten Monomeren, wie Butadien, Isopren, Styrol, Acrylnitril, Methylmethacrylat oder Vinylmethylether oder deren Mischungen

$b_{13}$) 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren.
Als solche bi- oder polyfunktionellen Vernetzungsmonomeren $b_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol,

Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen $b_2$ sind diejenigen bevorzugt, in denen $b_{21}$ Styrol oder α-Methylstyrol oder deren Mischungen und $b_{22}$ Acrylnitril oder Methacrylnitril bedeutet. Als bevorzugte Monomeren-Gemische werden vor allem Styrol und Acrylnitril oder α-Methylstyrol und Acrylnitril eingesetzt. Die Pfropfauflagen sind erhältlich durch Copolymerisation der Komponenten $b_{21}$ und $b_{22}$.

Die Pfropfgrundlage $b_1$ der Pfropfpolymerisate B, die aus den Komponenten $b_{11}$, gegebenenfalls $b_{12}$ und $b_{13}$ aufgebaut ist, wird auch als ASA-Kautschuk bezeichnet. Ihre Herstellung ist an sich bekannt und beispielsweise in der DE-A 28 26 925, der DE-A 31 49 358 und der DE-A 34 14 118 beschrieben.

Die Herstellung der Pfropfpolymerisate B kann beispielsweise nach der in der DE-PS 12 60 135 beschriebenen Methode erfolgen.

Der Aufbau der Pfropfauflage (Pfropfhülle) der Pfropfpolymerisate kann ein- oder zweistufig erfolgen.

Im Falle des einstufigen Aufbaues der Pfropfhülle wird ein Gemisch der Monomeren $b_{21}$ und $b_{22}$ in dem gewünschten Gew.-Verhältnis im Bereich von 95:5 bis 50:50, vorzugsweise von 90:10 bis 65:35 in Gegenwart des Elastomeren $b_1$, in an sich bekannter Weise (vgl. z.B. DE-OS 28 26 925), vorzugsweise in Emulsion, polymerisiert.

Im Falle eines zweistufigen Aufbaus der Pfropfhülle $b_2$ macht die 1. Stufe im allgemeinen 20 bis 70 Gew.-%, vorzugsweise 25 bis 50 Gew.-%, bezogen auf $b_2$, aus. Zu ihrer Herstellung werden vorzugsweise nur Styrol oder substituierte Styrole oder deren Mischungen ($b_{21}$) verwendet.

Die 2. Stufe der Pfropfhülle macht im allgemeinen 30 bis 80 Gew.-%, insbesondere 50 bis 75 Gew.-%, jeweils bezogen auf $b_2$, aus. Zu ihrer Herstellung werden Mischungen aus den Monomeren $b_{21}$ und den Nitrilen $b_{22}$ im Gewichtsverhältnis $b_{21}/b_{22}$ von im allgemeinen 90:10 bis 60:40, insbesondere 80:20 bis 70:30 angewendet.

Die Bedingungen der Pfropfpolymerisation werden vorzugsweise so gewählt, dass Teilchengrößen von 50 bis 700 nm ($d_{50}$-Wert der integralen Massenverteilung) resultieren. Maßnahmen hierzu sind bekannt und z.B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfpolymerisate mit unterschiedlicher Teilchengröße zu verwenden.

Um dies zu erreichen, werden die Teilchen des Kautschuks in bekannter Weise, z.B. durch Agglomeration, vergrößert, so dass der Latex bimodal (50 bis 180 nm und 200 bis 700 nm) aufgebaut ist.

In einer bevorzugten Ausführungsform wird eine Mischung aus zwei Pfropfpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfpolymerisate ist vorzugsweise derselbe, obwohl die Hülle des grobteiligen Pfropfpolymerisates insbesondere auch zweistufig aufgebaut werden kann.

Als Komponente C) enthalten die erfindungsgemäßen Formmassen 1 bis 97,5 Gew.-%, bezogen auf die Summe der Komponenten A) bis H), mindestens eines Copolymerisates auf der Basis von Styrol oder substituierten Styrolen und ungesättigten Nitrilen. Bevorzugte erfindungsgemäße Formmassen enthalten die Komponente C) in Anteilen von 3 bis 50, insbesondere von 6 bis 35 Gew.-%, bezogen auf die Summe der Komponenten A) bis H).

Die Copolymerisate C sind erfindungsgemäß aus

$c_1$) 60 bis 95 Gew.-%, vorzugsweise 70 bis 85 Gew.-% Styrol oder substituierten Styrolen der allgemeinen Formel I oder deren Mischungen und

$c_2$) 5 bis 40 Gew.-%, vorzugsweise 15 bis 30 Gew.-% mindestens eines ungesättigten Nitrils, bevorzugt Acrylnitril oder Methacrylnitril oder deren Mischungen

aufgebaut.

Die Copolymerisate C sind harzartig, thermoplastisch und kautschukfrei. Besonders bevorzugte Copolymerisate C sind solche aus Styrol und Acrylnitril, aus α-Methylstyrol und Acrylnitril oder aus Styrol, α-Methylstyrol und Acrylnitril. Es können auch mehrere der beschriebenen Copolymere gleichzeitig eingesetzt werden.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepfropft werden.

Die Copolymerisate C sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 ml/g auf, dies entspricht mittleren Molekulargewichten $M_w$ (Gewichtsmittelwert) von 40 000 bis 2

000 000 g/mol.

Die Komponente D) ist in den erfindungsgemäßen Formmassen in einer Menge von 0,5 bis 50, vorzugsweise 1 bis 30 und insbesondere 1,5 bis 25 Gew.-% enthalten. Diese ist ein Copolymerisat, das erhältlich ist durch Umsetzung von

d1) 5 bis 95, bevorzugt 10 bis 90 und besonders bevorzugt 15 bis 85 Gew.-% mindestens eines thermoplastischen Methacrylat-Polymeren D1 enthaltend mindestens eine Art funktioneller Gruppen ausgewählt aus Epoxy, Carboxyl, Hydroxyl, Anhydrid und Oxazolin, mit

d2) 5 bis 95, bevorzugt 10 bis 90 und besonders bevorzugt 15 bis 85 Gew.-% mindestens eines thermoplastischen Polyesters D2,

wobei sich die Summe von d1) und d2) zu 100 Gew.-% ergänzt.

Das thermoplastische Methacrylat-Polymere D1 enthält als Methacrylat-Monomere bevorzugt Methylmethacrylat (MMA) oder Acrylate, oder deren Mischungen. Besonders bevorzugt ist MMA.

Besonders bevorzugt ist das Methacrylat-Polymere D1 aufgebaut aus

d11) 80 bis 99,9, bevorzugt 85 bis 99,3 und insbesondere 90 bis 98,9 Gew.-% MMA (Komponente D11),

d12) 0 bis 19,9 bevorzugt 0,5 bis 14,8 und insbesondere 0,6 bis 9,5 Gew.-% mindestens eines weiteren Acrylates oder Methacrylates D12, und

d13) 0,1 bis 20, bevorzugt 0,2 bis 15 und insbesondere 0,5 bis 10 Gew.-% mindestens eines Monomeren D13 enthaltend mindestens eine Art funktioneller Gruppen ausgewählt aus Epoxy, Carboxyl, Hydroxyl, Anhydrid und Oxazolin,

wobei die Summe von d11), d12) und d13) 100 Gew.-% ergibt.

Das Methacrylat-Polymer D1 enthält demnach funktionelle Gruppen. Bei Verwendung von MMA als Methacrylat-Monomer spricht man von "reaktivem Polymethylmethacrylat" ("reaktivem PMMA"). Aus dem Vorstehenden ergibt sich, dass bevorzugt die funktionellen Gruppen durch Mitverwendung entsprechender "reaktiver" Monomere D13, die solche Gruppen enthalten, bei der Polymerisation der Methacrylat-Monomeren zum Polymer D1, in das Polymer D1 eingeführt werden.

Beispiele weiterer Arylate oder Methacrylate D12, die als Comonomere mitverwendet werden können, sind $C_1$- bis $C_{16}$-Alkylacrylate oder $C_2$- bis $C_{16}$-Alkylmethacrylate wie Methylacrylat, Ethylacrylat, n-Propylacrylat, i-Propylacrylat, n-Butylacrylat, i-Butylacrylat, t-Butylacrylat, n-Hexylacrylat, Cyclohexylacrylat, Dodecylacrylat, Ethylmethylacrylat, n-Propylmethylacrylat, i-Propylmethylacrylat, n-Butylmethylacrylat, t-Butylmethylacrylat, n-Hexylmethylacrylat, Cyclohexylmethylacrylat oder Dodecylmethacrylat.

Als reaktive Monomere D13 kommen beispielsweise in Betracht:

- für die Epoxygruppe: Glycidylmethacrylat, Isopropenylglycidylether, Allylglycidylether, bevorzugt Glycidylmethacrylat;
- für die Carboxylgruppe: Acrylsäure, Methacrylsäure, bevorzugt Acrylsäure;
- für die Hydroxylgruppe: Hydroxyalkylacrylate bzw. -methacrylate, bevorzugt Hydroxyethylhexylacrylat;
- für die Anhydridgruppe: Carbonsäureanhydride wie Maleinsäureanhydrid;
- für die Oxazolingruppe: Vinyloxazolin, Isopropenyloxazolin, bevorzugt Vinyloxazolin.

Soll das Methacrylat-Polymer D1 verschiedene Arten funktioneller Gruppen enthalten, kann man mehrere reaktive Monomere D13 verwenden.

In den Polymeren D1 können die Monomerbausteine D11, D13 sowie gegebenenfalls D12 statistisch verteilt sein oder eine Block- oder tapered-Struktur aufweisen (tapered bedeutet Gradient von D11-reich (D13-arm) nach D11-arm (D13-reich) oder umgekehrt.

Üblicherweise haben die Polymere D1 mittlere Molekulargewichte $M_w$ (Gewichtsmittelwert) von 30 000 bis 500 000, bevorzugt 40 000 bis 450 000, insbesondere 45 000 bis 300 000 g/mol.

Die Herstellung der Polymere D1 erfolgt nach bekannten Methoden, z.B. durch radikalische, group-transfer- oder anionische Polymerisation.

Die radikalische Polymerisation ist bekannt und kann z.B. als Substanz-, Lösungs- oder Perlpolymerisation durchgeführt werden. Sie wird beispielsweise in den Schriften NL-A 6605289, DE-A 12 31 013, DE-A 12 98 272, DE-A 36 31 826, JP-A 85/147417 und EP-A 457 147 beschrieben. Die radikalische Polymerisation ergibt in der Regel eher

breite Molmassenverteilungen (Verhältnis Gewichtsmittel/Zahlenmittel $M_w/M_n > 2$). Weitere Einzelheiten finden sich auch in Vieweg/Esser, Kunststoff-Handbuch, Band 9 "Polymethacrylate", Hanser-Verlag München 1975.

Die anionische Polymerisation liefert dagegen eher enge Molmassenverteilungen ($M_w/M_n \leq 2$). Ausführliche Beschreibungen der anionischen Polymerisation finden sich u.a. in M. Swarcz, M. van Beylen: "Ionic Polymerization and Living Polymers", Chapman & Hall, New York, London 1993, S. 120 - 130; M. Morton "Anionic Polymerization: Principles and Practice", Academic Press, New York, London, 1983, S. 23 - 27; T.P. Davis, D. M. Haddleton and S. N. Richards, J. Macromol. Sci.-Rev. Macromol. Chem. Phys., C34, 243 (1994) und P. Teyssie, P. Bayard, R. Jerome, K. Varshney, J.-S. Wang, P. Heim and B. Vuillemin, Macromol. Symp., 98, 171 (1995). Auch eine lebende anionische Polymerisation der Monomeren D11 bis D13 in Gegenwart von polaren aprotischen Lösungsmitteln (insbesondere THF) mit Lithiumalkylen als Initiator bei Temperaturen zwischen -120 und +20°C, bevorzugt ist der Bereich zwischen -100 und -20°C, ist möglich.

Als thermoplastische Polyester D2 sind solche, wie vorstehend unter Komponente A) aufgeführt, geeignet. Es können unterschiedliche Polyester D2) und A) eingesetzt werden, vorzugsweise werden jedoch gleiche Polyester D2) und A) eingesetzt.

Der Umsetzungsgrad (Quotient aus reagiertem D1 zu eingesetztem D1) der Komponente D) beträgt vorzugsweise 15 bis 100 %, bevorzugt 20 bis 80 und insbesondere 25 bis 75 %. Dieser wird üblicherweise durch $CH_2Cl_2$-Extraktion bestimmt:

Es werden ca. 5 g Granulat in 150 ml $CH_2Cl_2$ suspendiert und 24 h bei Raumtemperatur geschüttelt. Anschließend wird der lösliche Anteil abgetrennt und nach abziehen des Lösungsmittels quantitativ bestimmt. Der lösliche Anteil stellt nicht umgesetztes D1 dar.

Die Umsetzung des Methacrylat-Polymeren D1 mit dem Polyester D2 erfolgt entweder vorab, indem man D1 und D2 separat miteinander umsetzt und das erhaltene Copolymerisat D mit den anderen Komponenten A bis C und ggf. E bis H zur thermoplastischen Formmasse vermischt, oder in situ bei der Herstellung der Formmassen, indem man D1 und D2 den anderen Komponenten der Formmasse zufügt und sich demnach das Copolymerisat D erst beim Abmischen der Formmasse bildet.

Bei der separaten Umsetzung vorab nimmt man bevorzugt die Umsetzung vor, indem man die Ausgangsstoffe D1 und D2 unter Aufschmelzen vermischt und die Mischung für eine gewisse Zeit (die ausreichend ist zum Ablauf der chemischen Reaktion zwischen D1 und D2) schmelzflüssig hält und erforderlichenfalls durchmischt.

Bevorzugt setzt man bei der separaten Umsetzung D1 und D2 in einem Schmelzemischaggregat um. Solche Schmelzemischaggregate sind z.B. Schneckenkneter, etwa einwellige Kneter (z.B. Ko-Kneter, Einschneckenextruder insbesondere mit Misch- und Scherteilen), zweiwellige Kneter (z.B. Zweischneckenextruder Typ ZSK oder ZE, Kombiplast-Extruder, Doppelschnecken-Knetmischer MPC, zweistufige Mischer FCM, Knetschneckenextruder KEX, Scherwalzenextruder). Ebenso sind Kneter mit oder ohne Stempel geeignet, Trogkneter und Banbury-Mischer. Einzelheiten findet der Fachmann z.B. in Saechtling (Hg.), Kunststoff-Taschenbuch, 27. Ausgabe, Carl Hanser Verlag München 1998, S. 202-211.

Besonders bevorzugt erhält man das Copolymerisat D durch Schmelzekompoundierung des Methacrylat-Polymeren D1 mit dem Polyester D2.

Üblicherweise setzt man D1 und D2 bei Temperaturen von 230 bis 300°C, bevorzugt 235 bis 295 und insbesondere 240 bis 290°C um. Bei der Verwendung von Schmelzemischaggregaten sind die vorgenannten Temperaturen die Temperaturen der Mischaggregate (Extruder, Kneter etc.).

Die Dauer der Umsetzung - bei Schmelzemischaggregaten die Verweilzeiten - betragen in der Regel 0,5 bis 30, bevorzugt 0,75 bis 20 und insbesondere 1 bis 10 min. Nach erfolgter Umsetzung wird die Schmelze in der Regel auf bekannte Weise ausgetragen, abgekühlt und granuliert.

In einer anderen Ausführungsform erfolgt die separate Umsetzung von D1 mit D2 zum Copolymerisat D durch Lösen oder Quellen der Ausgangsstoffe D1 und D2 in geeigneten Lösungs- bzw. Quellungsmitteln und Inkontaktbringen der erhaltenen Lösungen bzw. gequollenen Substanzen. Beispielsweise kann man die Lösungen bei Temperaturen von 10 bis 200°C vermischen.

Geeignete Lösungsmittel für das Methacrylat-Polymer D1 und für den Polyester D2 sind z. B. halogenierte Alkohole wie Hexafluoroisopropanol (HFIP). Die Lösungsmittel werden nach erfolgter Umsetzung üblicherweise entfernt, z.B. mittels eines Eindampfextruders.

Bei der situ-Umsetzung vermischt man die Ausgangsstoffe Methacrylat-Polymer D1 und Polyester D2 in üblicher Weise mit den Komponenten A bis C und ggf. E bis H, wie dies weiter unten unter "Herstellung der Formmassen" beschrieben ist, wobei sich das Copolymerisat D bildet.

Die Komponente E) ist in den erfindungsgemäßen Formmassen in einer Menge von 0 bis 50, vorzugsweise 0 bis 45, insbesondere 1 bis 40 Gew.-% enthalten.

Bei der Komponente E handelt es sich um Füllstoffe (auch Verstärkungsstoffe genannt). Es kommen insbesondere teilchenförmige mineralische Füllstoffe und faserförmige Füllstoffe in Betracht. Man kann teilchenförmige mineralische Füllstoffe alleine, oder faserförmige Füllstoffe alleine, verwenden.

In den Mischungen beträgt der Anteil der Mineralien vorzugsweise 5 bis 95 und insbesondere 5 bis 90 Gew.-%, der Anteil der Fasern vorzugsweise 5 bis 95 und insbesondere 10 bis 95 Gew.-%, bezogen auf die Komponente E.

Als teilchenförmige mineralische Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45, bevorzugt weniger als 40 Mikrometer aufweisen und deren sogenanntes Aspektverhältnis vorzugsweise im Bereich von 1 bis 25, bevorzugt im Bereich von 2 bis 20 liegt, bestimmt am fertigen Produkt, d.h. in der Regel einem Spritzgussformteil Das Aspektverhältnis ist das Verhältnis von Teilchendurchmesser zu Dicke (größter Ausdehnung zu kleinster Ausdehnung).

Die Teilchendurchmesser können dabei z.B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 Mikrometer beträgt, kann auch mittels Siebanalyse gemessen werden.

Besonders bevorzugt werden als teilchenförmige Füllstoffe E) Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 Mikrometer und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 Mikrometer und einem Aspektverhältnis von 1,2 bis 20, jeweils bestimmt am fertigen Produkt.

Als Komponente E) werden z.B. faserförmige Füllstoffe wie Kohlenstofffasern, Kaliumtitanat-Whisker, Aramidfasern oder bevorzugt Glasfasern eingesetzt. Die Glasfasern können zur besseren Verträglichkeit mit der Polymermatrix mit einer Schichte und/oder einem Haftvermittler ausgerüstet sein. In einer bevorzugten Ausführungsform weisen mindestens 50 Gew.-% der faserförmigen Füllstoffe (Glasfasern) eine Länge von mehr als 50 Mikrometer auf. Die verwendeten (Glas)fasern können vorzugsweise einen Durchmesser von bis zu 25, besonders bevorzugt 5 bis 13 Mikrometer aufweisen. Vorzugsweise weisen mindestens 70 Gew.-% der Glasfasern eine Länge von mehr als 60 Mikrometer auf. Besonders bevorzugt betragt im fertigen Formteil die mittlere Länge der Glasfasern 0,08 bis 5 mm.

Die Länge der Glasfasern bezieht sich auf ein fertiges Formteil, das beispielsweise nach dem Spritzgießen erhalten wird. Dabei können die Glasfasern den Formmassen bereits als Kurzglasfasem in der entsprechend abgelängten Form oder auch in Form von Endlossträngen (Rovings) zugesetzt werden. Kohlenstoff- oder Glasfasern können auch in Form von Geweben, Matten oder Glasseidenrovings eingesetzt werden.

Die Komponente F ist in den erfindungsgemäßen Formmassen in einer Menge von 0 bis 2, vorzugsweise 0 bis 1,8, insbesondere 0 (bei Vorliegen 0,1) bis 1,5 Gew.-% enthalten.

Komponente F ist eine - bevorzugt niedermolekulare halogenfreie - organische Säure.

Unter niedermolekular im Sinne der vorliegenden Erfindung werden bis zu mehrkernige, beispielsweise bis zu fünfkemige Verbindungen, insbesondere monomolekulare Verbindungen verstanden.

Die Säuren sind bevorzugt halogenfrei, d.h. enthalten im molekularen Gerüst keine Halogene. Säuren, die geringfügige halogenhaltige Verunreinigungen aufweisen, sind dagegen erfindungsgemäß mit umfasst. Unter Säuren in Sinne der Erfindung werden auch deren Hydrate verstanden.

Vorteilhafterweise werden Säuren eingesetzt, die bei den Verarbeitungstemperaturen nicht oder nur gering flüchtig sind bzw. bei Temperaturen von bis zu etwa 320°C keine oder nur geringe Zersetzungsneigung zeigen.

Die Säuren können eine, zwei oder mehrere, beispielsweise bis zu zehn Säuregruppen enthalten.

Bevorzugt werden organische Säuren eingesetzt. Es kommen sowohl aromatische als auch aliphatische Säuren in Betracht. Ebenso können aliphatisch-aromatische Säuren verwendet werden. Zu den bevorzugten Säuren zählen Mono-, Di- und Polycarbonsäuren, z.B. Palmitinsäure, Stearinsäure, Benzoesäure und substituierte Benzoesäuren, Isophthalsäure, Terephthalsäure, Trimellithsäure, Sulfonsäuren wie p-Toluolsulfonsäure und aliphatische Sulfonsäuren, Fumarsäure, Zitronensäure, Mandelsäure oder Weinsäure.

Besonders bevorzugt werden Zitronensäure oder p-Toluolsulfonsäure oder deren Mischungen eingesetzt. Beispielsweise kann darin der Gewichtsanteil der Zitronensäure von 1 bis 99, bevorzugt von 10 bis 90 % und der der p-Toluolsulfonsäure entsprechend von 1 bis 99, bevorzugt von 10 bis 90 % betragen.

Komponente G ist in den erfindungsgemäßen Formmassen in einer Menge von 0 bis 25, vorzugsweise 0 bis 20, insbesondere 0 (bei Vorliegen 0,2) bis 15 Gew.-% enthalten.

Komponente G ist eine halogenfreie Phosphorverbindung.

Als Komponente G können alle bekannten üblichen phosphorhaltigen Flammschutzmittel eingesetzt werden. Bevorzugt werden die in der DE-A-40 34 336 und/oder die in der EP-A 0 522 397 aufgeführten Flammschutzmittel eingesetzt. Beispiele sind Tri-(2,6-dimethylphenyl)phosphat, Triphenylphosphat, Tricresylphosphat, Diphenyl-2-ethyl-cresylphosphat, Diphenyl-cresylphosphat, Tri(isopropylphenyljphosphat sowie Phosphorsäure-bis-phenyl-(4-phenylphenyl)-ester, Phosphorsäure-phenyl-bis-(4-phenylphenyl)-ester, Phosphorsäure-tris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-bis-phenyl-(1-phenylethyl)-phenyl)-ester, Phosphorsäure-phenyl-bis-(1-phenylethyl)-phenyl)-ester, Phosphorsäure-tris-(1-phenylethyl)-phenyl)-ester, Phosphorsäure-bis-phenyl-(1-methyl-1-phenylethyl)-phenyl-ester, Phosphorsäure-phenyl-bis-(1-methyl-1-phenylethyl)-phenyl-ester, Phosphorsäure-tris-((1-methyl-1-phenylethyl)-phenyl)-ester, Phosphorsäurephenyl-bis-(4-(1-phenylethyl)-2,6-dimethylphenyl)-ester, Phosphorsäure-bis-phenyl-2,4-di-benzylphenylester, Phosphorsäure-bis-phenyl-2,4-di(1-phenylethyl)-phenylester und Phosphorsäure-bis-phenyl-2,4-di-(1-methyl-1-phenylethyl)-phenylester. Sie können auch im Gemisch mit Triphenylphosphinoxid oder Tri-(2,6-dimethylphenyl)phosphinoxid eingesetzt werden.

Zudem sind als Flammschutzmittel Resorcinoldiphosphat und entsprechend höhere Oligomere, Hydrochinondiphosphat und entsprechende höhere Oligomere bevorzugt.

Außerdem wird auf die in EP-A-0 103 230, EP-A-0 174 493, EP-A-0 206 058, EP-A-0 363 608 und EP-A-0 558 266 genannten Phosphorverbindungen verwiesen.

Komponente H wird in Mengen von 0 bis 45, vorzugsweise 0 bis 20, insbesondere 0 (bei Vorliegen 0,4) bis 10 Gew.-% eingesetzt.

Komponente H sind weitere Zusatzstoffe.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen 0 bis 45, vorzugsweise 0 bis 20, insbesondere 0 (bei Vorliegen 0,2) bis 10 Gew.-%, bezogen auf das Gesamtgewicht der Zusammensetzung.

Pigmente und Farbstoffe sind allgemein in Mengen von 0 bis 4, bevorzugt 0 bis 3,5 und insbesondere 0 (bei Vorliegen 0,5) bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3.Pb(OH)_2$), Lithopone, Antimonweiß und Titandioxid. Von den beiden gebräuchlichsten Kristallmodfikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumoxid und Eisenoxid), Kobaltschwarz und Antimonschwarz sowie besonders bevorzugt Ruß, der meist in Form von Fumace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Weitere geeignete Farbmittel sind z.B. in R. Gächter und H. Müller (Hg.), Plastics Additives Handbook, 4th ed. 1993, Reprint Nov. 1996, Hanser Verlag München, auf S. 647 bis 676 beschrieben.

Außerdem sind fluoreszierende Weißmacher zu nennen, z.B. Bis-benzoxazole, Triazinphenylcumarine, Benzotriazol-phenylcumarine, Naphthotriazol-phenylcumarine, Bis-(styryl)bisphenyle. Weitere Beispiele nennt das erwähnte Buch von Gächter und Müller (4. Auflage 1993) auf S. 779-785.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden. Weiterhin können auch Ethylenoxid-Propylenoxid-Copolymere als Gleit- und Entformungsmittel verwendet werden.

Insbesondere vorteilhaft ist der Einsatz von UV- und Wärmestabilisatoren für Polycarbonat und Styrolcopolymere. Beispiele geeigneter Stabilisatoren sind zudem in DE-A-44 19 897 aufgeführt. Weiterhin können Umesterungsinhibitoren, wie Phosphate, Phosphite oder Phosphonite enthalten sein.

Als Komponente H) können die erfindungsgemäßen Formmassen 0 bis 50, vorzugsweise 0,5 bis 20 und insbesondere 0,7 bis 10 Gew.-% H2) mindestens eines hoch- oder hyperverzweigten Polycarbonates, mit einer OH-Zahl von 1 bis 600, vorzugsweise 10 bis 550 und insbesondere von 50 bis 550 mg KOH/g Polycarbonat (gemäß DIN 53240, Teil 2) oder mindestens eines hyperverzweigten Polyesters als Komponente H3) oder deren Mischungen wie nachstehend erläutert wird, enthalten.

Unter hyperverzweigten Polycarbonaten H2) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt.

Unter "dendrimer" wird im Zusammenhang mit der vorliegenden Erfindung verstanden dass der Verzweigungsgrad 99,9 - 100% beträgt. Zur Definition des "Degree of Branching" siehe H. Frey et al., Acta Polym. 1997, 48, 30.

Der Verzweigungsgrad DB (degree of branching) der betreffenden Stoffe ist definiert als

$$DB = \frac{T + Z}{T + Z + L} \times 100 \ \%,$$

(wobei T die mittlere Anzahl der terminalen Monomereinheiten, Z die mittlere Anzahl der verzweigten Monomereinheiten und L die mittlere Anzahl der linearen Monomereinheiten in den Makromolekülen der jeweiligen Stoffe bedeuten).

Vorzugsweise weist die Komponente H2) ein Zahlenmittel des Molekulargewichtes $M_n$ von 100 bis 15000, vorzugsweise von 200 bis 12000 und insbesondere von 500 bis 10000 g/mol (GPC, Standard PMMA).

Die Glasübergangstemperatur Tg beträgt insbesondere von -80°C bis +140, vorzugsweise von -60 bis 120°C (gemäß DSC, DIN 53765).

Insbesondere beträgt die Viskosität (mPas) bei 23°C (gemäß DIN 53019) von 50 bis 200000, insbesondere von 100 bis 150000 und ganz besonders bevorzugt von 200 bis 100000.

Die Komponente H2) ist vorzugsweise erhältlich durch ein Verfahren, welches mindestens die folgenden Schritte umfasst:

a) Umsetzung mindestens eines organischen Carbonats (A) der allgemeinen Formel $RO[(CO)]_nOR$ mit mindestens einem aliphatischen, aliphatisch/aromatisch oder aromatischen Alkohol (B), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, aromatisch/aliphatisch oder aromatischen Kohlenwasserstoffrest mit 1 bis 20 C-Atomen handelt, und wobei die Reste R auch unter Bildung eines Ringes miteinander verbunden sein können und n eine ganze Zahl zwischen 1 und 5 darstellt, oder

ab) Umsetzung von Phosgen, Diphosgen oder Triphosgen mit o.g. Alkohol (B) unter Chlorwasserstoffeliminierung

sowie

b) intermolekulare Umsetzung der Kondensationsprodukte (K) zu einem hochfunktionellen, hoch- oder hyperverzweigten Polycarbonat,

wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Als Ausgangsmaterial kann Phosgen, Diphosgen oder Triphosgen eingesetzt werden, wobei organische Carbonate bevorzugt sind.

Bei den Resten R der als Ausgangsmaterial eingesetzten organischen Carbonate (A) der allgemeinen Formel RO(CO)OR handelt es sich jeweils unabhängig voneinander um einen geradkettigen oder verzweigten aliphatischen, aromatisch/aliphatisch oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel $RO(CO)_nOR$ eingesetzt; n beträgt vorzugsweise 1 bis 3, insbesondere 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder $NO_x$ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Beispiele für Carbonate, bei denen n größer 1 ist, umfassen Dialkyldicarbonate, wie Di(-t-butyl)dicarbonat oder Dialkyltricarbonate wie Di(-t-butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Poly-esterole. Dabei sind Glycerin, Trimethylolethan, Trimethylolpropan, 1,2,4-Butan-triol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3-und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxyphenyl, Bis-(4-Bis(hydroxyphenyl)sulfid, Bis(4-Hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 39,9 mol-% bezüglich der Gesamtmenge aller Alkohole (B) und (B') zusammen. Bevorzugt beträgt die Menge 0 bis 35 mol-%, besonders bevorzugt 0 bis 25 mol-% und ganz besonders bevorzugt 0 bis 10 mol-%.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat,

Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate ist es notwendig, das Verhältnis von den OH-Gruppen enthaltenden Verbindungen zu Phosgen oder Carbonat so einzustellen, dass das resultierende einfachste Kondensationsprodukt (im weiteren Kondensationsprodukt (K) genannt) im Mittel entweder eine Carbonatgruppe oder Carbamoylgruppe und mehr als eine OH-Gruppe oder eine OH-Gruppe und mehr als eine Carbonatgruppe oder Carbamoylgruppe enthält. Die einfachste Struktur des Kondensationsproduktes (K) aus einem Carbonat (A) und einem Di- oder Polyalkohol (B) ergibt dabei die Anordnung $XY_n$ oder $Y_nX$, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

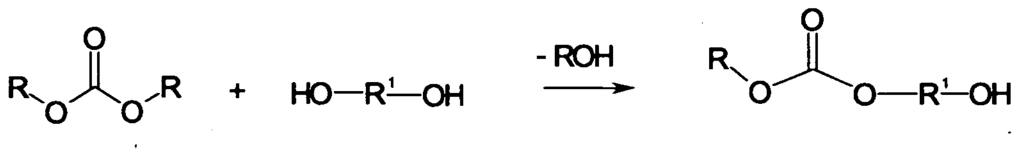

1

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs $XY_2$, veranschaulicht durch die allgemeine Formel 2. Fokale Gruppe ist hier eine Carbonatgruppe.

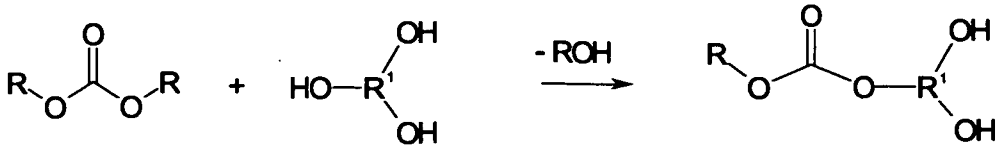

2

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs $XY_3$, veranschaulicht durch die allgemeine Formel 3. Fokale Gruppe ist hier eine Carbonatgruppe.

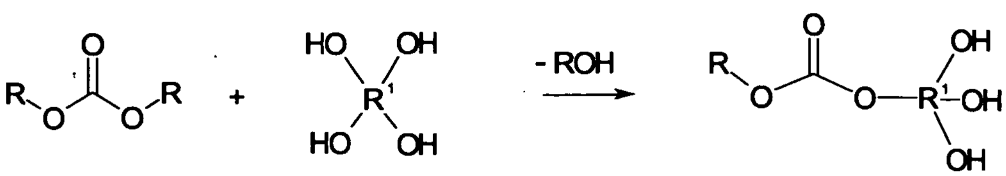

3

In den Formeln 1 bis 3 hat R die eingangs definierte Bedeutung und $R^1$steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs $X_2Y$, fokale Gruppe ist hier eine OH-Gruppe. In der Formel 4 haben R und $R^1$ die gleiche Bedeutung wie in den Formeln 1 bis 3.

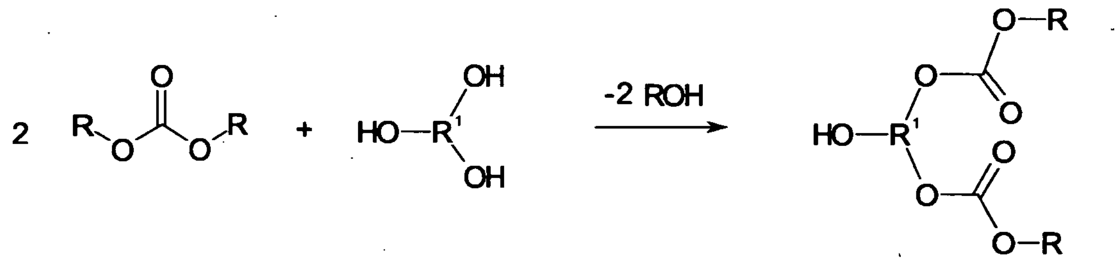


4

Werden zu den Komponenten zusätzlich difunktionelle Verbindungen, z.B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs $XY_2$, fokale Gruppe ist eine Carbonatgruppe.

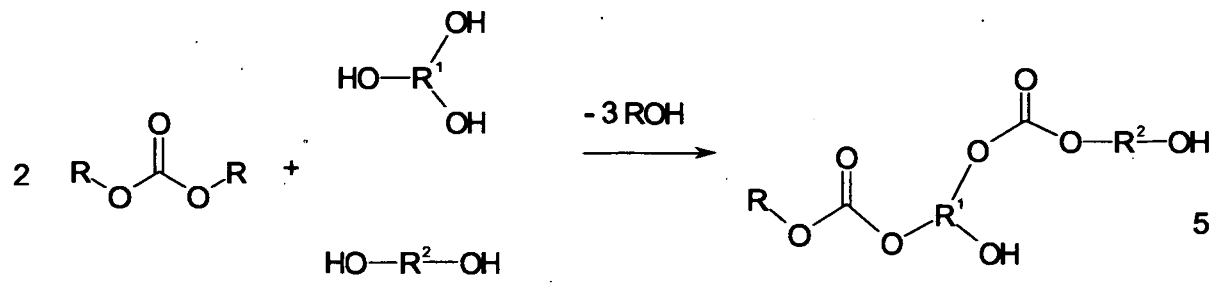


5

In Formel 5 bedeutet $R^2$ einen organischen, bevorzugt aliphatischen Rest, R und $R^1$ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül $XY_2$. Setzt man die Ausgangsprodukte im Verhältnis 2:1 ein, wie in (IV) dargestellt, so erhält man ein Molekül $X_2Y$. Bei einem Verhältnis zwischen 1:1 und 2:1 erhält man eine Mischung von Molekülen $XY_2$ und $X_2Y$.

Die beispielhaft in den Formeln 1 -5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenswert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titantetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Potykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

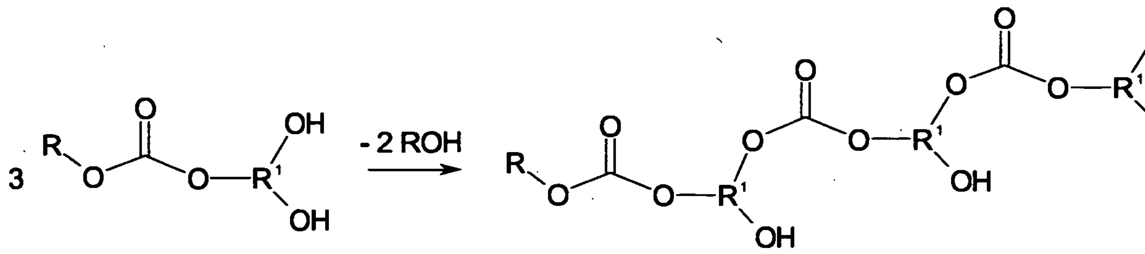


6

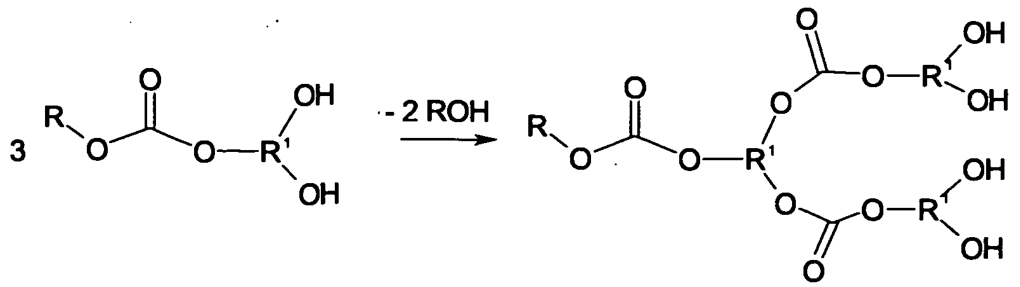


7

In Formel 6 und 7 sind R und $R^1$ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

Weiterhin kann man den Katalysator deaktivieren, bei basischen z.B. durch Zugabe von Lewissäuren oder Protonensäuren.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Produkt gestrippt, das heißt, von niedermolekularen, flüchtigen Verbindungen befreit. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat- oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan, Tris(hydroxyethyl)amino-methan, Ethylen-diamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen oder Harnstoffgruppen aufweisende Polycarbonate.

Durch Zugabe von Dicarbonsäuren, Tricarbonsäuren, z.B. Terephthalsäuredimethylester oder Tricarbonsäureester lassen sich Estergruppen erzeugen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-Gruppen oder Carbamoylgruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Ein großer Vorteil des Verfahren liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Als Komponente H3) können die erfindungsgemäßen Formmassen mindestens eines hyperverzweigten Polyesters des Typs $A_xB_y$ enthalten, wobei

x mindestens 1,1 vorzugsweise mindestens 1,3, insbesondere mindestens 2
y mindestens 2,1, vorzugsweise mindestens 2,5, insbesondere mindestens 3

beträgt.

Selbstverständlich können als Einheiten A bzw. B auch Mischungen eingesetzt werden.

Unter einem Polyester des Typs $A_xB_y$ versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern H3) werden im Rahmen dieser Erfindung unvernetzte Makromoleküle mit

Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30 und vorstehend unter B1) aufgeführte Formel.

Die Komponente H3) weist vorzugsweise ein $M_n$ von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist H3) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die $T_g$ beträgt vorzugsweise von -50°C bis 140°C und insbesondere von -50 bis 100°C (mittels DSC, nach DIN 53765).

Insbesondere solche Komponenten H3) sind bevorzugt, in denen mindestens eine OH- bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente H3) erhältlich, u.z. indem man

(a) eine oder mehrere Dicarbonsäuren oder eines oder mehrere Derivate derselben mit einem oder mehreren mindestens trifunktionellen Alkoholen
oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester H3) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus
$C_1$-$C_{10}$-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbemsteinsäure, 2-Ethylbemsteinsäure, 2-Phenylbemsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden

die betreffenden Anhydride in monomerer oder auch polymerer Form,

Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,

ferner Mono- und Divinylester sowie

gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden

- die betreffenden Anhydride in monomerer oder auch polymerer Form,

  - Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester

- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente H3) zu erhalten.

Als Diole für Variante (b) der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H oder Gemische von zwei oder mehr Vertretern der voranstehenden Verbindungen, wobei n eine ganze Zahl ist und n = 4. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Das Molverhältnis der Moleküle A zu Molekülen B im $A_x$ By-Polyester bei den Varianten (a) und (b) beträgt 4: 1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen

mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von mono- oder Dicarbonsäuren.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauem führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel $Al(OR)_3$ und Titanate der allgemeinen Formel $Ti(OR)_4$ als saure anorganische Katalysatoren einsetzbar, wobei die Reste R jeweils gleich oder verschieden sein können und unabhängig voneinander gewählt sind aus

$C_1$-$C_{10}$-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in $Al(OR)_3$ bzw. $Ti(OR)_4$ jeweils gleich und gewählt aus Isopropyl oder 2-Ethylhexyl.

Bevorzugte saure metallorganische Katalysatoren sind beispielsweise gewählt aus Dialkylzinnoxiden $R_2SnO$, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das erfindungsgemäße Verfahren wird unter Inertgasatmosphäre durchgeführt, das heißt beispielsweise unter Kohlendioxid, Stickstoff oder Edelgas, unter denen insbesondere Argon zu nennen ist.

Das erfindungsgemäße Verfahren wird bei Temperaturen von 60 bis 200°C durchgeführt. Vorzugsweise arbeitet

man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des erfindungsgemäßen Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente H3) in Gegenwart von Enzymen oder Zersetzungsprodukten von Enzymen hergestellt werden (gemäß DE-A 101 63163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geotrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Das erfindungsgemäße Verfahren wird bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Das erfindungsgemäße Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Die nach dem erfindungsgemäßen Verfahren erhältlichen hochfunktionellen, hyperverzweigten Polyester, zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass der Verzweigungsgrad (Degree of branching), das heißt die mittlere Anzahl von dendritischen

Verknüpfungen plus die mittlere Anzahl von Endgruppen pro Molekül 10 - 99,9 %, bevorzugt 20 - 99 %, besonders bevorzugt 30 - 90 % beträgt (siehe dazu H. Frey et al. Acta Polym. 1997, 48, 30).

Die erfindungsgemäßen Polyester haben ein Molekulargewicht $M_w$ von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester sind carboxyterminiert, carboxy- und Hydroxylgruppen-terminiert und vorzugsweise Hydroxylgruppen-terminiert.

Die Verhältnisse der Komponenten H2) zu H3) betragen vorzugsweise von 1 : 20 bis 20 : 1, insbesondere von 1 : 15 bis 15 : 1 und ganz besonders von 1 : 5 bis 5 : 1, wenn diese in Mischung eingesetzt werden.

Herstellung der Formmassen

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der (beispielsweise trockenen) Komponenten A bis D und gegebenenfalls E bis H - bzw. im Fall der oben erwähnten in situ-Herstellung des Copolymerisates D, das Mischen der Komponenten A, B, C, D1 und D2 und ggf. E bis H - kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wässrigen Dispersion isoliert worden sind.

Demnach wurde auch ein Verfahren zur Herstellung der erfindungsgemäßen Formmassen durch Mischen der trockenen Komponenten A bis D (bzw. D1 und D2) und gegebenenfalls E bis H bei 200 bis 320°C gefunden.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Formkörpern, Fasern und Folien eingesetzt werden. Zudem können sie besonders bevorzugt zur Herstellung von Karosserieteilen eingesetzt werden.

Insbesondere sind die Formmassen zur Herstellung von Karosserieteilen (z.B. im Automobilsektor) geeignet, besonders bevorzugt für großflächige Karosserieaußenteile wie Kotflügel, Heckklappen, Fronthauben, etc.

Die Erfindung betrifft demnach auch entsprechende Formkörper, Fasern oder Folien sowie Karosserieteile.

Die erfindungsgemäßen Formmassen sowie Formkörper, Fasern und Folien zeichnen sich insbesondere durch eine gute Zähigkeit und verbessertes Verarbeitungsverhalten aus.

Die Erfindung wird durch die nachfolgenden Beispiele näher erläutert.

Beispiele

Die mittlere Teilchengröße und die Teilchengrößenverteilung wurden aus der integralen Massenverteilung an einer veraschten und mittels Ultraschall dispergierten Probe bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796 bestimmt wurden. Die Ultrazentrifugenmessung liefert die integrale Massenverteilung des Teilchendurchmessers einer Probe. Hieraus lässt sich entnehmen, wie viel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, dass sie auf 10 bzw. 90 Gew.-% der Teilchen bezogen sind. Der Quotient $Q = (d_{90}-d_{10})/d_{50}$ stellt ein Maß für die Verteilungsbreite der Teilchengröße dar.

Es wurden folgende Komponenten eingesetzt:

A: Polybutylenterephthalat mit einer Viskositätszahl VZ von 130 ml/g, gemessen nach DIN 53727 an einer 0,5 gew.-%igen Lösung bei 25°C in Phenol/o-Dichlorbenzol 1:1, enthaltend 0,65 Gew.-%, bezogen auf A, Pentaerythrittetrastearat.

B1: Ein feinteiliges Pfropfpolymerisat, hergestellt aus

b1) 16 g Butylacrylat und 0,4 g Tricyclodecenylacrylat, die in 150 g Wasser unter Zusatz von 1 g des Natriumsalzes einer $C_{13}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurde innerhalb von 3 Stunden eine Mischung aus 82 g Butylacrylat und 1,6 g Tricyclodecenylacrylat zu gegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt, und die Teilchengrößenverteilung war eng (Quotient Q = 0,29).

b2) 150 g des nach b1) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung dieser Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die mittlere Teilchengröße 91 nm.

B2: Ein grobteiliges Pfropfpolymerisat, das folgendermaßen hergestellt wurde:

b3) Zu einer Vorlage aus 1,5 g des nach b1) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$- $C_{18}$-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).

b4) 150 g des nach b3) erhaltenen Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

C1: Ein Copolymer aus 81 Gew.-% Styrol und 19 Gew.-% Acrylnitril, hergestellt durch kontinuierliche Lösungspolymerisation, wie es im Kunststoff-Handbuch, Hg. R. Vieweg und G. Daumiller, Band 5 "Polystyrol", Hanser-Verlag, München 1969 auf S. 122-124 beschrieben ist. Die Viskositätszahl (bestimmt nach DIN 53727 an einer 0,5 gew.-%igen Lösung in Dimethylformamid bei 23°C) betrug 72 ml/g, entsprechend einem gewichtsmittleren Molekulargewicht von 174 000 g/mol.

CV1: Terpolymer aus 68 Gew.-% Styrol, 29,9 Gew.-% Acrylnitril und 2,1 Gew.-% Maleinsäureanhydrid mit einer Viskositätszahl von 65 ml/g (gemessen in einer 0,5 gew.-%igen Lösung in Dimethylformamid bei 23°C).

CV2: Poly(methylene(phenylen isocyanat), mit einem NCO-Gehalt von 31,2 Gew.-% (bestimmt gemäß DIN 53185) und einer Viskosität von 200 mPas bei 25°C (bestimmt gemäß DIN EN ISO 3219) z.B. Lupranat® M20A der BASF Aktiengesellschaft.

D1: Erhalten durch Extrusion bei T=260°C von 50 % eines Copolymeren, bestehend aus 93 Gew.-% MMA, 2 Gew.-% n-Butylacrylat und 5 Gew.-% Glycidylmethacrylat mit einer Viskositätszahl von 66 ml/g (gemessen in einer 0,5 gew.-%igen Lösung in Chloroform bei 23°C) mit 50 % eines Polybutylenterephthalates [z.B. Ultradur® B 4500, charakterisiert durch eine Viskositätszahl von 130 (gemessen in 0,5 gew.-%iger Lösung aus Phenol/o-Dichlorbenzol)].

DV: Copolymer, bestehend aus 93 Gew.-% MMA, 2 Gew.-% n-Butylacrylat und 5 Gew.-% Glycidylmethacrylat mit einer Viskositätszahl von 66 ml/g (gemessen in einer 0,5 gew.-%igen Lösung in Chloroform bei 23°C).

E1: Talkum IT-Extra, Hersteller Norwegian Talc
$X_{10}$=1,7 µm, $X_{90}$=10,82 µm [bestimmt mittels Laserbeugung, wobei die Mineralien in einer Suspensionszelle in einem VE-Wasser/1 % CV-K8-Tensid-Gemisch (Vertreiber: CV-Chemievertrieb, Hannover) homogenisiert wurden ( Magnetrührer, Drehzahl 60 $min^{-1}$)]. pH-Wert der wässrigen Suspension: 8,5.

E2: Glasfaser mit einer Epoxysilan-Schlichte und einem Faserdurchmesser von 10 µm (z.B. PPG 3786).

F1: Zitronensäure-Hydrat, Reinheit 99 %, Fa. Aldrich.

H: Ein hochmolekularer Mehrkomponentenester aus Pentaerythrit und Dicarbonsäuren mit einer Viskosität von 110 bis 150 mPa*s bei 80°C (Loxiol®G 70S der Fa. Cognis).

Herstellung der thermoplastischen Formmassen

Die Komponenten A) bis H) wurden auf einem Zweiwellenextruder (ZSK 30 der Fa. Werner & Pfleiderer) bei 250 bis 280°C gemischt, als Strang ausgetragen, gekühlt und granuliert.
Das getrocknete Granulat wurde bei 260 bis 280°C zu Normkleinstäben, ISO-Prüfkörpern, Rundscheiben (60 x 3 mm) verarbeitet, die Werkzeugtemperatur betrug 80°C.
Die Wärmeformbeständigkeit der Proben wurde mittels der Vicat-Erweichungstemperatur ermittelt. Die Vicat-Erweichungstemperatur wurde nach DIN 53460, mit einer Kraft von 49,05 N und einer Temperatursteigerung von 50 K je Stunde, an Normkleinstäben ermittelt.
Die Fließfähigkeit der Formmassen wurde nach DIN 53735 bei einer Temperatur von 250°C und 10 kg Belastung bestimmt. Die Schmelzestabilität wurde anhand der Veränderung des MVI-Wertes nach Temperaturbelastung (280°C, 20 Minuten) bestimmt.

$$\Delta MVI = \left( \frac{MVI_{20'} - MVI_{0'}}{MVI_{0'}} \right) \times 100\ \%,$$

Die Kerbschlagzähigkeit wurde nach ISO 179 1 eA bei Raumtemperatur an ISO-Stäben geprüft.
Die Zusammensetzungen und Eigenschaften der thermoplastischen Formmassen sind Tabelle 1 zu entnehmen.

Tabelle 1:

| Formmasse Nr. | V1 | 2 | V3 | V4 | 5 | V6 | 7 | 8 | 9 |
|---|---|---|---|---|---|---|---|---|---|
| Komponente [Gew.-%] | | | | | | | | | |
| A | 65 | 60 | 65 | 64,7 | 60 | 49,5 | 44,5 | 44,3 | 49,5 |
| B1 | 25 | 25 | 25 | 24,8 | 12,5 | 30 | 30 | 30 | 12,5 |
| B2 | - | - | - | - | 12,5 - | | - | - | 12,5 |
| C1 | 10 | 5 | 5 | 5 | 5 | 10 | 5 | 5 | 5 |
| CV1 | - | - | - | 5 | - | - | - | - | - |
| CV2 | - | - | - | 0,5 | - | - | - | - | - |
| D1 | - | 10 | - | - | 10 | - | 10 | 10 | 10 |
| DV | - | - | 5 | - | - | - | - | - | - |
| E1 | - | - | - | - | - | 10 | 10 | 10 | - |
| E2 | - | - | - | - | - | - | - | - | 10 |
| F | - | - | - | - | - | - | - | 0,2 | - |

(fortgesetzt)

| Formmasse Nr. | V1 | 2 | V3 | V4 | 5 | V6 | 7 | 8 | 9 |
|---|---|---|---|---|---|---|---|---|---|
| Komponente [Gew.-%] | | | | | | | | | |
| H1 | - | - | - | - | - | 0,5 | 0,5 | 0,5 | 0,5 |
| Vicat B [°C] | 108 | 110 | 110 | 109 | 110 | 112 | 112 | 113 | 167 |
| ak, RT [kJ/m$^2$] | 6,3 | 14,1 | 12,1 | 8,6 | 16,2 | 5,3 | 11,0 | 12,1 | 5,9 |
| $W_s$ -30°C [Nm] | 2 | 39 | 26 | 8 | 51 | 1 | 18 | 21 | 2 |
| ΔMVI [%] | -15 | 4 | 17 | 45 5 | | -19 | 7 | 8 | 6 |

**Patentansprüche**

**1.** Thermoplastische Formmassen, enthaltend

A) 10 bis 97,5 Gew.-% mindestens eines thermoplastischen Polyesters A,
B) 1 bis 97,5 Gew.-% mindestens eines Pfropfpolymerisats B aus

b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,
b2) 20 bis 60 Gew.-% einer Pfropfauflage B2 aus

b21) 60 bis 95 Gew.-% Styrol oder substituierten Styrolen B21 der allgemeinen Formel I

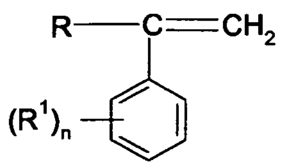

(I)

worin R einen $C_{1-8}$-Alkylrest oder Wasserstoff und $R^1$ einen $C_{1-8}$-Alkylrest bedeutet und n den Wert 1, 2 oder 3 hat, oder deren Mischungen und
b22) 5 bis 40 Gew.-% mindestens eines ungesättigten Nitrils B22,

C) 1 bis 97,5 Gew.-% mindestens eines thermoplastischen Copolymerisats C aus,

c1) 60 bis 85 Gew.-% Styrol oder substituierten Styrolen C1 der allgemeinen Formel I oder deren Mischungen und
c2) 15 bis 40 Gew.-% mindestens eines ungesättigten Nitrils C2,

D) 0,5 bis 50 Gew.-% mindestens eines Copolymerisats D, erhältlich durch Umsetzung von

d1) 5 bis 95 Gew.-% mindestens eines thermoplastischen Methacrylat-Polymeren D1 enthaltend mindestens eine Art funktioneller Gruppen, ausgewählt aus Epoxy, Carboxyl, Hydroxyl, Anhydrid und Oxazolin, mit
d2) 5 bis 95 Gew.-% mindestens eines thermoplastischen Polyesters D2,

E) 0 bis 40 Gew.-% mindestens eines Füllstoffs E,
F) 0 bis 2 Gew.-% mindestens einer organischen Säure F,
G) 0 bis 25 Gew.-% mindestens einer halogenfreien Phosphorverbindung G,
H) 0 bis 45 Gew.-% weiterer Zusatzstoffe H,

wobei die Summe der Komponenten A bis H stets 100 % ergibt..

2. Formmassen nach Anspruch 1, enthaltend

   A) 10 bis 93 Gew.-%
   B) 3 bis 50 Gew.-%
   C) 3 bis 50 Gew.-%
   D) 1 bis 30 Gew.-%

3. Formmassen nach den Ansprüchen 1 oder 2, wobei die Pfropfgrundlage B1 des Pfropfcopolymerisats B aufgebaut ist aus

   b11) 70 bis 99,9 Gew.-% mindestens eines Alkylacrylates B11 mit 1 bis 8 C-Atomen im Alkylrest,
   b12) 0 bis 30 Gew.-% eines weiteren copolymerisierbaren monoethylenisch ungesättigten Monomeren B12 oder deren Mischungen, und
   b13) 0,1 bis 5 Gew.-% eines copolymerisierbaren, polyfunktionellen, die Vernetzung bewirkenden Monomeren B13,

   wobei die Summe von B11, B12 und B13 100 Gew.-% ergibt.

4. Formmassen nach den Ansprüchen 1 bis 3, wobei das Copolymerisat C aus 70 bis 83 Gew.-% Styrol und 17 bis 30 Gew.-% Acrylnitril aufgebaut ist.

5. Formmassen nach den Ansprüchen 1 bis 4, wobei das Methacrylat-Polymer D1 aufgebaut ist aus

   d11) 80 bis 99,9 Gew.-% Methylmethacrylat D11,
   d12) 0 bis 19,9 Gew.-% mindestens eines weiteren Acrylates oder Methacrylates D12, und
   d13) 0,1 bis 10 Gew.-% mindestens eines Monomeren D13, enthaltend mindestens eine Art funktioneller Gruppen, ausgewählt aus Epoxy, Carboxyl, Hydroxyl, Anhydrid und Oxazolin,

   wobei die Summe von D11, D12 und D13 100 Gew.-% ergibt.

6. Formmassen nach den Ansprüchen 1 bis 5, wobei als Monomer D13 Glycidylmethacrylat, Allylglycidylether, Isopropenylglycidylether oder deren Mischungen verwendet wird.

7. Formmassen nach den Ansprüchen 1 bis 6, wobei das Copolymerisat D durch Schmelzekompoundierung des Methacrylat-Polymeren D1 mit dem Polyester D2 erhältlich ist.

8. Verwendung von Formmassen gemäß den Ansprüchen 1 bis 7 zur Herstellung von Formkörpern, Fasern und Folien.

9. Formkörper, Fasern und Folien erhältlich aus den Formmassen gemäß den Ansprüchen 1 bis 7.

## Claims

1. A thermoplastic molding composition, comprising

   A) from 10 to 97.5% by weight of at least one thermoplastic polyester A,
   B) from 1 to 97.5% by weight of at least one graft polymer B composed of

      b1) from 40 to 80% by weight of a graft base composed of an elastomeric polymer B1 based on alkyl acrylates having from 1 to 8 carbon atoms in the alkyl radical, on ethylene/propylene, on dienes, or on siloxanes, and with a glass transition temperature below 0°C,
      b2) from 20 to 60% by weight of a graft B2 composed of

         b21) from 60 to 95% by weight of styrene or of substituted styrenes B21 of the general formula I

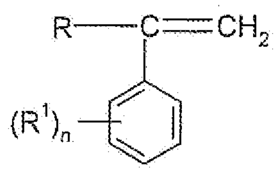

(I)

where R is a $C_{1-8}$-alkyl radical or hydrogen and $R^1$ is a $C_{1-8}$-alkyl radical and n is 1, 2, or 3, or a mixture of these, and
b22) from 5 to 40% by weight of at least one unsaturated nitrile B22,

C) from 1 to 97.5% by weight of at least one thermoplastic copolymer C composed of

c1) from 60 to 85% by weight of styrene or of substituted styrenes C1 of the general formula I, or a mixture thereof, and
c2) from 15 to 40% by weight of at least one unsaturated nitrile C2,

D) from 0.5 to 50% by weight of at least one copolymer D, obtainable via reaction of

d1) from 5 to 95% by weight of at least one thermoplastic methacrylate polymer D1 comprising at least one type of functional groups, selected from epoxy, carboy, hydroxy, anhydride, and oxazoline, with
d2) from 5 to 95% by weight of at least one thermoplastic polyester D2,

E) from 0 to 40% by weight of at least one filler E,
F) from 0 to 2% by weight of at least one organic acid F,
G) from 0 to 25% by weight of at least one halogen-free phosphorous compound G,
H) from 0 to 45% by weight of other additives H,

where the entirety of components A to H always gives 100%.

**2.** The molding composition according to claim 1, comprising

A) from 10 to 93% by weight
B) from 3 to 50% by weight
C) from 3 to 50% by weight
D) from 1 to 30% by weight.

**3.** The molding composition according to claim 1 or 2, where the graft base B1 of the graft copolymer B is composed of

b11) from 70 to 99.9% by weight of at least one alkyl acrylate B11 having from 1 to 8 carbon atoms in the alkyl radical,
b12) from 0 to 30% by weight of another copolymerizable monoethylenically unsaturated monomer B12, or a mixture of these, and
b13) from 0.1 to 5% by weight of a copolymerizable, polyfunctional monomer B13 that brings about crosslinking,

where the entirety of B11, B12, and B13 gives 100% by weight.

**4.** The molding composition according to claims 1 to 3, where the copolymer C is composed of from 70 to 83% by weight of styrene and from 17 to 30% by weight of acrylonitrile.

**5.** The molding composition according to claims 1 to 4, where the methacrylate Polymer D1 is composed of

d11) from 80 to 99.9% by weight of methyl methacrylate D11,
d12) from 0 to 19.9% by weight of at least other acrylate or methacrylate D12, and
d13) from 0.1 to 10% by weight of at least one monomer D13, comprising at least one type of functional groups, selected from epoxy, carboxy, hydroxy, anhydride, and oxazoline,

where the entirety of D11, D12, and D13 gives 100% by weight.

6. The molding composition according to claims 1 to 5, where glycidyl methacrylate, allyl glycidyl ether, isopropenyl glycidyl ether, or a mixture of these is used as monomer D13.

7. The molding composition according to claims 1 to 6, where the copolymer D is obtainable via melt compounding of the methacrylate polymer D1 with the polyester D2.

8. The use of molding compositions according to claims 1 to 7 for production of moldings, fibers, and foils.

9. A molding, a fiber, or a foil obtainable from the molding compositions according to claims 1 to 7.

**Revendications**

1. Matières à mouler thermoplastiques, contenant

A) 10 à 97,5 % en poids d'au moins un polyester thermoplastique A,
B) 1 à 97,5 % en poids d'au moins un produit de polymérisation par greffage B composé de

b1) 40 à 80 % en poids d'une base de greffage constituée d'un polymère B1 à élasticité de caoutchouc, à base d'acrylates d'alkyle ayant de 1 à 8 atomes de carbone dans le radical alkyle, d'éthylène/propylène, de diènes ou de siloxanes et ayant une température de transition vitreuse inférieure à 0 °C,
b2) 20 à 60 % en poids d'une base de greffage B2 constituée de

b21) 60 à 95 % en poids de styrène ou de styrènes substitués B21 de formule générale I

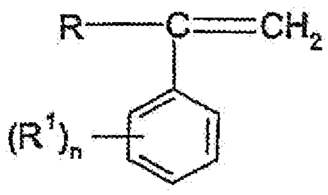

(I)

dans laquelle R représente un radical alkyle en $C_1$-$C_8$ ou un atome d'hydrogène et $R^1$ représente un radical alkyle en $C_1$-$C_8$ et n a la valeur 1, 2 ou 3, ou de mélanges de ceux-ci et
b22) 5 à 40 % en poids d'au moins un nitrile insaturé B22,

C) 1 à 97,5 % en poids d'au moins un copolymère thermoplastique C constitué de

c1) 60 à 85 % en poids de styrène ou de styrènes substitués C1 de formule générale I ou de mélanges de ceux-ci et
c2) 15 à 40 % en poids d'au moins un nitrile insaturé C2,

D) 0,5 à 50 % en poids d'au moins un copolymère D, pouvant être obtenu par réaction de

d1) 5 à 95 % en poids d'au moins un polymère de méthacrylate D1 contenant au moins un type de groupes fonctionnels, choisis parmi les groupes époxy, carboxy, hydroxy, anhydride et oxazoline, avec
d2) 5 à 95 % en poids d'au moins un polyester thermoplastique D2,

E) 0 à 40 % en poids d'au moins une charge E,
F) 0 à 2 % en poids d'au moins un acide organique F,
G) 0 à 25 % en poids d'au moins un composé phosphoré G exempt d'halogène,
H) 0 à 45 % en poids d'autres additifs H,

la somme des composants A à H donnant toujours 100 %.

2. Matières à mouler selon la revendication 1, contenant

A) 10 à 93 % en poids
B) 3 à 50 % en poids
C) 3 à 50 % en poids
D) 1 à 30 % en poids.

3. Matières à mouler selon la revendication 1 ou 2, dans lesquelles la base de greffage B1 du produit de copolymérisation par greffage B est constituée de

b11) 70 à 99,9 % en poids d'au moins un acrylate d'alkyle B11 ayant de 1 à 8 atomes de carbone dans le radical alkyle,
b12) 0 à 30 % en poids d'un autre monomère B12 copolymérisable à insaturation monoéthylénique, ou de mélanges de tels monomères, et
b13) 0,1 à 5 % en poids d'un monomère B13 copolymérisable, polyfonctionnel, provoquant la réticulation,

la somme de E11, B12 et B13 donnant 100 % en poids.

4. Matières à mouler selon les revendications 1 à 3, dans lesquelles le copolymère C est constitué de 70 à 83 % en poids de styrène et de 17 à 30 % en poids d'acrylonitrile.

5. Matières à mouler selon les revendications 1 à 4, dans lesquelles le polymère de méthacrylate D1 est constitué de

d11) 80 à 99,9 % en poids de méthacrylate de méthyle D11,
d12) 0 à 19,9 % en poids d'au moins un autre acrylate ou méthacrylate D12, et
d13) 0,1 à 10 % en poids d'au moins un monomère D13, contenant au moins un type de groupes fonctionnels, choisi parmi les groupes époxy, carboxy, hydroxy, anhydride et oxazoline,

la somme de D11, D12 et D13 donnant 100 % en poids.

6. Matières à mouler selon les revendications 1, à 5, dans lesquelles on utilise en tant que monomère D13 le méthacrylate de glycidyle, l'allylglycidyléther, l'isopropénylglycidyléther ou des mélanges de ceux-ci.

7. Matières à mouler selon les revendications 1 à 6, dans lesquelles le copolymère D peut être obtenu par mélange en masse fondue du polymère de méthacrylate D1 avec le polyester D2.

8. Utilisation des matières à mouler selon les revendications 1 à 7, pour la production de corps moulés, fibres et films.

9. Corps moulés, fibres et films pouvant être obtenus à partir des matières à mouler selon les revendications 1 à 7.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2758497 A
- DE 19845317 A
- EP 284086 A
- US 4902749 A
- US 5310793 A
- EP 573680 A
- US 4352904 A
- WO 0455107 A
- DE 4401055 A
- US 3651014 A
- DE 1260135 A
- DE 3149358 A
- DE 2826925 A
- DE 3414118 A
- DE 1260135 C
- DE OS2826925 A
- NL 6605289 A
- DE 1231013 A
- DE 1298272 A
- DE 3631826 A
- JP 60147417 A
- EP 457147 A
- DE 4034336 A
- EP 0522397 A
- EP 0103230 A
- EP 0174493 A
- EP 0206058 A
- EP 0363608 A
- EP 0558266 A
- DE 4419897 A
- DE 10138216
- DE 10147712
- DE 10163163 A


### In der Beschreibung aufgeführte Nicht-Patentliteratur


- **Lee P.-C. ; Kuo W.-F. ; Chang F.-C.** *Polymer,* 1994, vol. 35, 5641
- **Hage E. ; Hale W. ; Keskkula ; Paul D.R.** *Polymer,* 1997, vol. 38, 3237
- **F.-C. Chang.** *Polymer,* 1994, vol. 35, 5641
- Polymethacrylate. **Vieweg/Esser.** Kunststoff-Handbuch. Hanser-Verlag, 1975, vol. 9
- **M. Swarcz ; M. van Beylen.** Ionic Polymerization and Living Polymers. Chapman & Hall, 1993, 120-130
- **M. Morton.** Anionic Polymerization: Principles and Practice. Academic Press, 1983, 23-27
- **T.P. Davis ; D. M. Haddleton ; S. N. Richards.** *J. Macromol. Sci.-Rev. Macromol. Chem. Phys.,* 1994, vol. C34, 243
- **P. Teyssie ; P. Bayard ; R. Jerome ; K. Varshney ; J.-S. Wang ; P. Heim ; B. Vuillemin.** *Macromol. Symp.,* 1995, vol. 98, 171
- Kunststoff-Taschenbuch. Carl Hanser Verlag München, 1998, 202-211
- **R. Gächter ; H. Müller.** Taschenbuch der Kunststoffadditive. Carl Hanser Verlag, 1983, 494-510
- **G. Benzing.** Pigmente für Anstrichmittel. Expert-Verlag, 1988, 78ff
- Plastics Additives Handbook. Hanser Verlag, 1993, 647-676
- **P.J. Flory.** *J. Am. Chem. Soc.,* 1952, vol. 74, 2718
- **H. Frey et al.** *Chem. Eur. J.,* 2000, vol. 6 (14), 2499
- Electronic Release. Ullmann's Encyclopedia of Industrial Chemistry. Verlag Wiley-VCH, 2000
- Immobilization. **Kurt Faber.** Biotransformations in organic chemistry. Springer Verlag, 1997, 345-356
- **A. Sunder et al.** *Chem. Eur. J.,* 2000, vol. 6 (1), 1-8
- **von W. Scholtan ; H. Lange.** *Kolloid-Z, und Z.-Polymere,* 1972, vol. 250, 782-796
- Polystyrol. Kunststoff-Handbuch. Hanser-Verlag, 1969, vol. 5, 122-124